# EUROPEAN PATENT APPLICATION

(11) **EP 0 814 115 A2**
(43) Date of publication of application: **29.12.1997**
(21) Application number: 97304229.4
(22) Date of filing: 17.06.1997
(51) Int. Cl.: C08J 7/04, C08J 7/18, C09D 4/02

(54) **Method for producing a coated polycarbonate article**

(30) Priority: 18.06.1996 US 665711
(71) Applicant: GENERAL ELECTRIC COMPANY, Schenectady, NY 12345 (US)
(72) Inventor: Riding, Karen Dorothy, Castleton, New York 12033 (US); Lilly, Kenneth Lee, Evansville, Indiana 47712 (US); Stewart, Charles Francis, Pittsfield, Massachusetts 01201 (US); Bassi, Bernard, Adams, Massachusetts 01220 (US)
(74) Representative: Szary, Anne Catherine, Dr.

(57) **Abstract**

A method for providing coated polycarbonate film that provides: (1) controlled surface finish, printable, UV cured coating on the surface of a polycarbonate film, and (2) irradiation through the polycarbonate film without degradation of the uncoated surface.

## Description

This invention relates to a method for producing coated polycarbonate film; and, more particularly, relates to an improved method for (1) providing controlled surface finish and printable, ultraviolet radiation cured coating on the surface of a polycarbonate film, and (2) irradiation through the polycarbonate resin film without degradation of the uncoated surface.

### Brief Description of Related Art

Polycarbonate resin films generally have acceptable levels of strength and clarity for many purposes and uses but lack high levels of abrasion and chemical resistance. Radiation curable acrylic coatings and methods for their application to enhance abrasion and chemical resistance are known, see for example the descriptions in U.S. Patents 4,929,506; 5,162,390; and 5,271,968. While prior methods exist for applying radiation curable acrylic coatings to polycarbonate film, the surface finish, and printability of these cured coatings may be less than desirable. Adhesion of ink or resin to the polycarbonate film uncoated surface is negatively effected by degradation of the polycarbonate film.

We have discovered that the adhesion of inks and resins to polycarbonate films is greatly improved by curing the film coating with ultraviolet radiation selected to have an average wavelength above about 320 nm, advantageously from about 320 to 400 nm. Operation in this wavelength reduces degradation of the uncoated resin surface.

The coated film products of the invention exhibit enhanced abrasion and chemical resistance, expanding their use for in-mold decoration (IMD) to produce automotive, appliance and business equipment component parts. In-mold decoration involves the use of a printed film or applique which may be formed into a three-dimensional shape, placed into a mold and a thermoplastic resin is injected behind the film at elevated temperatures and pressures.

The current invention is focused on the use of longer wavelength UV radiation to produce "UV hardcoated" films and their subsequent use in IMD applications. This is particularly important in the appliance market, since these applications require the use of hardcoated films for abrasion and chemical resistance. We have discovered that the use of short wavelength UV light (<320 nm) causes photochemical induced oxidation of the polycarbonate surface when employed to cure a "coating" on the polycarbonate surface.

### SUMMARY OF THE INVENTION

The invention comprises a method of producing a coated polycarbonate film, which comprises;
providing a thermoplastic film of a polycarbonate resin, having an upper and a lower film surface;
coating at least one of the upper and the lower film surface with a radiation-curable acrylic coating composition; and
curing the coating on the film surface with ultraviolet radiation selected to have an average wavelength above about 320 nm.

The invention also comprises the product coated films and their use in in-mold decoration.

The term "coating" as used herein, is inclusive of both continuous coatings and discontinuous coatings such as graphics applied by screenprinting techniques of acrylic inks.

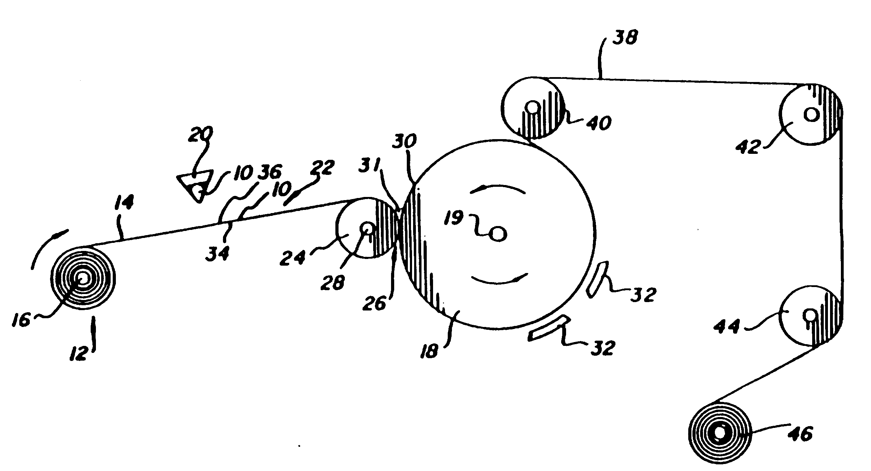

### BRIEF DESCRIPTION OF THE DRAWING

The accompanying drawing is a horizontal elevational schematic view of a casting drum for practicing the method of the invention.

### DETAILED DESCRIPTION OF THE PREFERRED EMBODIMENTS OF THE INVENTION

A preferred embodiment method of the invention involves the steps of (i) applying an ultraviolet radiation (UV curable) coating composition which is substantially free of nonreactive volatile components, such as solvents, to a surface of a polycarbonate resin substrate; (ii) heating the uncured coating composition and the surface of the substrate to a temperature selected from between 90°F. and 150°F. to drive a portion of the uncured coating composition into a region beneath the surface of the polycarbonate resin substrate; and (iii) ultraviolet radiation curing of the applied coating composition by directing ultraviolet radiation of the above-specified wavelength (average) into the coating composition and penetrated region. Upon UV curing of the coating composition, the penetrated region beneath the surface of the polycarbonate resin substrate provides an interlocking bond between the substrate and the cured coating, of improved strength.

The method of the present invention provides an ultraviolet radiation-cured coating on the surface of polycarbonate resin films. The particular apparatus depicted in the drawing is intended for the application and cure of a coating material on a continuous polycarbonate film substrate. The film substrate employed in conjunction with the equipment of the drawing should be flexible and capable of allowing the passage of ultraviolet radiant energy therethrough, and the properties of the polycarbonate film should not be unacceptably affected by such passage of radiant energy. The radiant energy source is selected to operate at an ultraviolet radiation frequency having an average wavelength within the range of from about 320 to 400 nm. A preferred polycarbonate film for the method of the present invention is one formed from a thermoplastic polycarbonate material, such as LEXAN^{•} resin, a product of General Electric Company. Typical examples of polycarbonate resins are described in U.S. Pat. No. 4,351,920 which is incorporated herein by reference thereto, and are obtained by the reaction of aromatic dihydroxy compounds with a carbonate precursor such as phosgene. A preferred aromatic dihydroxy compound is 2,2-bis(4-hydroxy phenyl) propane, (Bisphenol-A). The term aromatic polycarbonate resins is meant to include polyester carbonates obtained from the reaction products of a dihydroxy phenol, a carbonate precursor and a dicarboxylic acid such as terephthalic acid and isophthalic acid. Optionally an amount of a glycol may also be used as a reactant. Polycarbonate film may be made by well-known methods. Typically, the molten polycarbonate is cast onto an extrusion roll stack, and both sides of the material are polished and pressed to a uniform thickness. In conjunction with the equipment of the drawing, the thickness of the polycarbonate film substrate may range from about 0.5 mil to about 30 mils, depending upon the ability of the substrate to remain flexible. Preferably the polycarbonate film has a thickness of from 5 to 20 mils.

The ultraviolet radiation-curable coating compositions are generally comprised of monomers and oligomers containing acrylic, methacrylic, and vinylic unsaturation as well as other 100% solids convertible materials (e.g. monomer-soluble polymers and elastomers, inorganic silica fillers and pigments and the like). The coating systems generally comprise monomers having molecular weights of from about 100 to 1000, and having single unsaturation or di-, tri-, or higher multifunctional unsaturation sites. In the preferred practice of the present invention the coating is substantially free (<1%) of volatile, non-reactive components and preferably the coating compositions are 99 percent to 100 percent by weight reactive components and solid materials and more preferably are 99.9 percent to 100 percent by weight reactive components and solid materials and most preferably are 100 percent by weight reactive components and solid materials. The solid materials include non-volatile solid materials such as polymeric materials and colloidal silica. Suitable polymeric materials include cellulose acetate butyrate. The coating composition is preferably 100% convertible to solids upon exposure to ultraviolet radiation. The coating composition may contain an amount of a latent UV screener such as resorcinol monobenzoate. The composition also contains an amount of a photo initiator effective to permit photocuring of the composition at the selected wavelength.

The preferred acrylic coating composition contains a substantial level of a relatively low molecular weight aliphatic alkane diol diacrylate which will penetrate, via diffusion, the region below the surface of polycarbonate substrate upon contact and exposure to elevated temperatures. A suitable aliphatic alkane diol diacrylate is 1,6-hexanediol diacrylate. A preferred acrylate coating composition contains from 5 percent to 60 percent by weight of an aliphatic alkane diol diacrylate based on the total weight of the coating composition. The aliphatic diol diacrylate preferably contains from 2 to 12 carbon atoms in the aliphatic portion thereof. Suitable aliphatic diol diacrylates include ethylene glycol diacrylate, butane diol diacrylate, hexane diol diacrylate, octane diol diacrylate, decane diol diacrylate. A preferred coating composition contains about 37 percent by weight trimethylolpropane triacrylate (TMPTA), about 15 percent by weight dipentaerythritol nonohydroxy pentacrylate (DIPEPA) 37 percent by weight 2,6-hexanediol diacrylate, about 9 percent cellulose acetate butyrate (CAB) and about 2 percent by weight of the photoinitiator, diethoxyacetophenone (DEAP). A preferred silica filled acrylic coating employs a mixture of 22 percent 1,6-hexanediol diacrylate, 22 percent trimethylolpropane triacrylate, 35 percent functionalized colloidal silica, 7 percent of a latent ultraviolet radiation absorber such as benzene sulfonate ester of Cyasorb^{•} 5411 (BSEX) as described by D. R. Olson, J. Applied Polymer Science 28, 1983, p. 1159 incorporated herein by reference and 3 percent of a photoinitiator such as diethoxyacetophenone (DEAP). Representative functionalized colloidal silica is set forth in Olson et al, U.S. Patent No. 4,455,205; Olson et al, U.S. Patent No. 4,491,508; Chung, U.S. Patent No. 4,478,976 and Chung, U.S. Patent No. 4,486,504 incorporated herein by reference thereto. The aliphatic alkane diol diacrylate, and more particularly 1,6-hexanediol diacrylate by virtue of its ability to readily swell a polycarbonate matrix, facilitates quick and adequate penetration and diffusion of a sufficient amount of the coating composition into the region beneath the surface of the substrate to promote adhesion between the coating and the substrate upon curing of the coating composition.

Those skilled in the art will gain an appreciation of the invention from the following description when read in conjunction with a viewing of the accompanying drawing.

A suitable apparatus for applying and curing a coating on the surface of a polymeric substrate, in accordance with the method of the present invention, is depicted in the accompanying drawing. A radiation-curable coating material 10 is continuously applied by flowing it onto the surface of the film substrate 14 at a controlled rate.

Substrate roll 12 is formed from a roll of usually uncoated substrate 14 (when the coating to be applied according to the method of the present invention, is to be a screenprinted graphic the substrate roll 14 may be a roll of polycarbonate film previously coated with an ink-receptive coating), surrounding a core 16. Substrate 14 is unwound pursuant to the movement of casting drum 18 (described below). Coating material 10 may be applied to the surface of substrate 14 by dripping of the material onto the substrate 14 by use of an applicator 20. It will be apparent to those skilled in the art that adjustments may be made in the coating system in order to apply the coating to the substrate efficiently. Coating material 10 may be applied to substrate 14 by any of a number of well-known roll coating methods, such as spraying, brushing, curtain coating, and dipping, as well as other well-known roll coating methods, such as reverse roll coating, etc. The thickness of radiation-curable coating 10 applied to the substrate and the thickness of the resultant cured hardcoat 21 is dependent upon the end use of the article and the physical properties desired, and their thickness may range from about 0.05 mil to about 5.0 mils for the nonvolatile coating. The preferred thickness is from about 0.2 mil to about 0.5 mil.

After coating material 10 is applied to substrate 14, the coated substrate 22 is guided to nip roll 24. The choice of materials which form the nip roll 24 used in the present invention is not critical. The rolls may be made of plastic, metal (i.e. stainless steel, aluminum), rubber, ceramic materials, and the like. Nip roll 24 may be provided with a sleeve, preferably formed from a resilient material such as tetrafluoroethylene or polypropylene, or from one of the variety of currently available synthetic rubber compounds and blends thereof. The sleeve is snugly fitted over the roll surface to provide a smooth, friction-minimizing surface for contacting substrate 22. Nip roll 24 is adjustable relative to the position of casting drum 18, described below, and may optionally be independently driven.

As shown in the drawing, casting drum 18 is situated in a position adjacent nip roll 24, such that the outer circumferences of nip roll 24 and drum 18 are adjacent to each other at an interface defining a nip 26 which is described below. The applied pressure at the interface of nip roll 24 and drum 18 may be adjusted by well known methods, such as air cylinders (not shown), attached to the axle 28 of nip roll 24, which selectively urges the roll toward drum 18. Typically, the applied pressure at the interface is slight, i.e. less than 5 pounds per linear inch, when the substrate is not passing through nip 26. The applied pressure can be readjusted according to a variety of parameters when a substrate having a coating thereon is passing through nip 26, as described below.

Casting drum 18 surrounds central axle 19, and is preferably made from a material which is conductive to heat, and preferably comprised of stainless steel or chromium-plated steel. Furthermore, it is preferred that the drum be independently driven by an outside power source (not shown).

Casting drum surface 30 may be provided with a wide variety of textures or patterns, depending upon the texture or pattern desired to be imparted to coating 10 and the resultant hardcoat 38. For instance, surface 30 may be provide with a highly polished chrome-plated surface if a high degree of gloss is desired for the hardcoat 38. If a lower sheen is desired for the hardcoat 38, surface 30 may be less polished so as to provide a matte texture to the coating. Similarly, a design pattern may be embossed on surface 30 to impart a mirror-image design pattern to hardcoat 38. The cured coating will create a hardcoat 38 which will thus become a permanent mirror-image of casting drum surface 30.

Although a nitrogen blanket may be employed to ensure an anaerobic cure of the coating composition it is preferred that an anaerobic cure be obtained without the use of such a nitrogen blanket. In order to minimize the presence of air in the coating 10 prior to curing, without the use of a nitrogen gas blanket, the pressure capable of being exerted at nip 26 is carefully adjusted. The adjustment of applied pressure at nip 26 may be accomplished as described above. To obtain a certain coating thickness the exact pressure that will be exerted at nip 26 will depend on factors such as the viscosity of coating 10, the substrate speed, the degree of detail in the design pattern on surface 30 (if present), and temperature of the casting drum. Typically, for a substrate having a thickness of 15 mils having applied thereon an acrylic-based coating having a thickness of 0.6 mil and a viscosity of 220 centipoises, at a substrate speed of 50 feet per minute and a roll cover of 55 durometer hardness (Shore A) a nip pressure of 25 pounds/linear inch is applied to the coated substrate. Coating 10 is thereby pressed into contact with both substrate 22 and casting drum surface 30, thereby ensuring that there is a substantial absence of free diatomic oxygen from the coating during curing, so as to ensure a substantially complete curing of the coating and a cured coating, hardcoat 38, exhibiting a mirror image of the texture and/or pattern of casting drum surface 30. Excess coating forms a bead 31 of uncured coating composition material above the nip 26.. and across the width of the drum. This bead 31 ensures that adequate coating material enters through the nip 26 across the width of the drum.

After substrate 22 having coating 10 applied thereon passes through nip 26 it is cured by means of a lamp system source of ultraviolet radiant energy. As shown in the drawing, means 32 for transmitting ultraviolet radiation energy transmits the ultraviolet radiation energy into a surface 34 of substrate 22 opposite a surface 36 having coating 10 thereon. The radiant energy passes through the transparent substrate 22 and is absorbed by the coating 10. The average wavelength of the UV radiation is above about 320 nm, advantageously from about 320 to 400 nm. The lamp system used to generate such UV radiation may consist of discharge lamps, e.g. xenon, metallic halide, metallic arc, or high, medium or low pressure mercury vapor discharge lamps, each having operating pressures of from as low as a few millitorrs. up to about 10 atmospheres. The radiation dose level applied to coating 10 through substrate 22 may range from about 2.0 J/CM² to about 10.0 J/CM². A typical UV curing system suitable for the present invention is a 300 watt Fusion systems F-450 microwave type UV lamp (D or V bulb). The D bulbs have an output spectra of from about 200 to 450 nm (average 320 to 400 nm) and the V bulbs have an output spectra of from about 280 to 450 nm (average above 320 nm). Other commercially available lamps having the specified average wavelengths are manufactured by American Ultraviolet Company or UV Systems and Equipment. Filters can also be used in conjunction with UV lamps which radiate broader spectrums of wavelength, to eliminate the shorter wavelengths, thereby radiating the average wavelength specified; see for example the filters described in U.S. Patent 4,042,849 incorporated herein by reference thereto. The number of lamps directing UV light to the surface of the substrate 22 is not critical; however, a greater number of lamps may allow a higher production rate for the substrate having coating 10 thereon. Typically, two lamps, each producing 300 watts/linear inch of radiant energy, are sufficient for an acrylic-based coating having a thickness of about 0.5 mils, when the production line speed is approximately 50 feet/minute. Such a curing procedure results in both the polymerization of the polyfunctional acrylic monomers and the cross-linking of the polymers to form hard, non-tacky coatings. The coating may receive the post curing by further exposure to ultraviolet radiation of the wavelength specified after leaving the surfaces of the casting drum 18.

After the layer of coating 10 material has been applied to and cured on substrate 22 according to the method of the present invention, the resulting product is a hardcoated polycarbonate film article 38 which is guided around idler rolls 40, 42 and 44 then collected on takeup roll 46, the latter typically being independently driven and capable of separating the hardcoated polycarbonate article 38 from drum surface 30.

A preferred embodiment of the present invention involves heating the polycarbonate substrate 22 and uncured coating composition 10 to a temperature of from between 90°F. and 150°F. prior to curing of the coating composition 10. In the preferred method of the present invention, the applied coating composition 10 needs to be in contact with thermoplastic resin substrate 22 for a sufficient period of time after application of the coating composition 10 and prior to cure thereof and at a sufficient temperature, to cause a sufficient amount of the coating composition to diffuse into a region beneath the surface 34 of the thermoplastic resin substrate 22. Preferably the coating composition 10 penetrates beneath the surface to a depth of from 0.05 microns to 5 microns, more preferably from 0.1 microns to 1 micron ana to create a region containing both thermoplastic resin and coating composition. The region is located adjacent the coated surface 34 of the substrate. Preferably the substrate 22 and coating composition 10 are kept in contact at an elevated temperature of from 90°F. to 150°F. for a period of from 1 to 5 seconds. The heating step is not significantly involved in the curing of the coating composition. Upon curing of the coating 10, the penetrated region provides an interlocking matrix of thermoplastic resin and cured coating 38 which locks the coating 10 and the substrate 22 together to improve adhesion therebetween. The step of heating the substrate 22 and coating 10 prior to ultraviolet radiation curing of the coating composition 10 can be accomplished by internally heating drum 18. The drum can be heated internally by hot oil or the like (not shown). The coating compositions the present invention are radiation curable rather than heat curable compositions.

It will be understood by those skilled in the art that a nitrogen blanket may be used alone or in conjunction with the apparatus and preferred methods of the present invention.

The following specific examples describe the manner and the process of the present invention but should not be construed as a limitation upon the broadest aspects of the invention.

### EXAMPLE 1

Employing the apparatus described above and shown in the accompanying drawing a polycarbonate resin film having a thickness of between 0.007" and 0.025" was coated with one of three inks. the coatings were cured by radiation exposure from a gallium doped arc lamp having an average wavelength of about 400 nm. The ink type, line speed, lamp power, and adhesion obtained are shown in **Table I,** below.

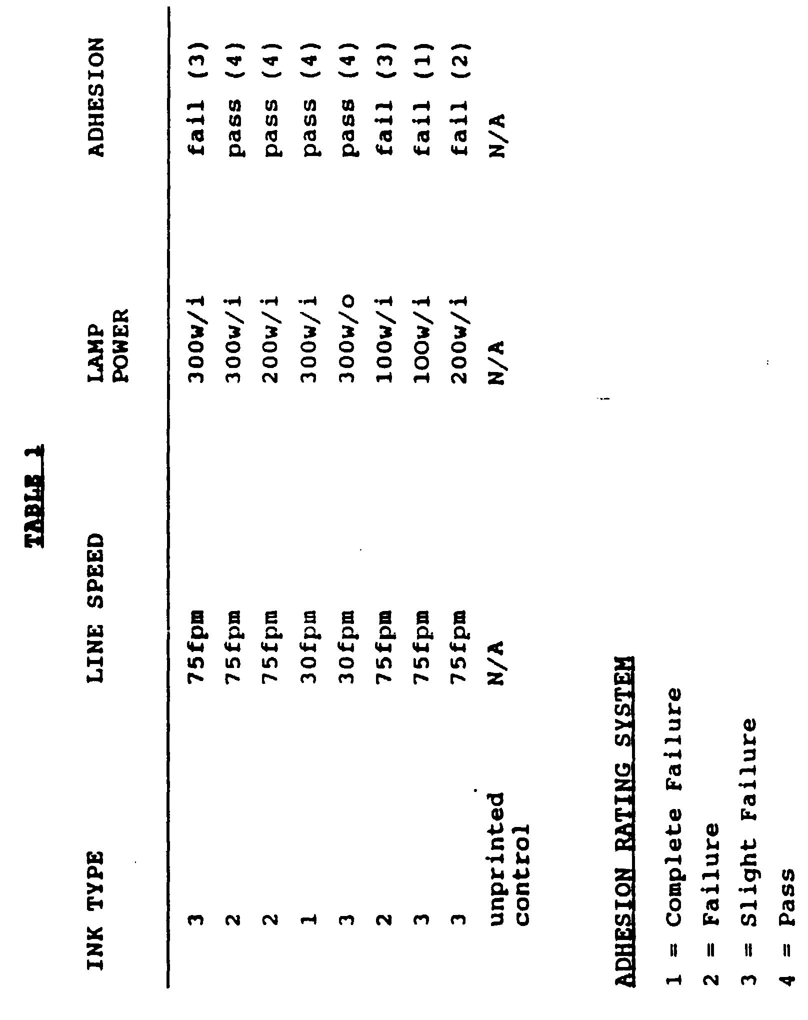

### EXAMPLE 2

Employing the apparatus described above and shown in the accompanying drawing, a polycarbonate resin film (Lexan^{•} General Electric Company, supra.) having a thickness of about 10 mils was coated with a variety of U-V curable hardcoats. After curing with gallium doped lamps (average wave length of about 320 to 400 nm), the coated films (identified as "HP-S", "HP-H" and "HP-W") were tested for adhesion, chemical and abrasion resistance. Testing was carried out by cutting strips of the coated films HP-S, HP-H and HP-W, and injection molding a polycarbonate resin directly on the film surface to obtain film/resin plaques. The peel strengths (force required to pull the film off the plaque) was measured on an Instron tensile tester. tests were also performed to measure chemical resistance, yellowness index (YI) and abrasion resistance (ASTM-D 1044). The control was an uncoated polycarbonate film. The test results are set forth in Table 2, below. For purposes of comparison, the procedure of this example was repeated, except that in place of the gallium doped lamps, curing was effected with mercury arc lamps with an average wave length of about 250 to 320 nm (H fusion system lamp). The test results are also set forth in Table 2, below.

The use of films or sheets of synthetic polymeric resins to decorate molded polycarbonate resin articles is well known. Methods of molding such articles (in-mold decorating) are well known and described for example in the U.S. Patents 4,898,706; 4,961,894; and 5,264,172, all of which are incorporated herein by reference thereto. In general, the film or sheet of applique is formed into a 3-dimensional shape and placed into a mold. A molten thermoplastic resin is injected into the mold cavity space behind the formed substrate. Upon de-molding, a decorated article is obtained.

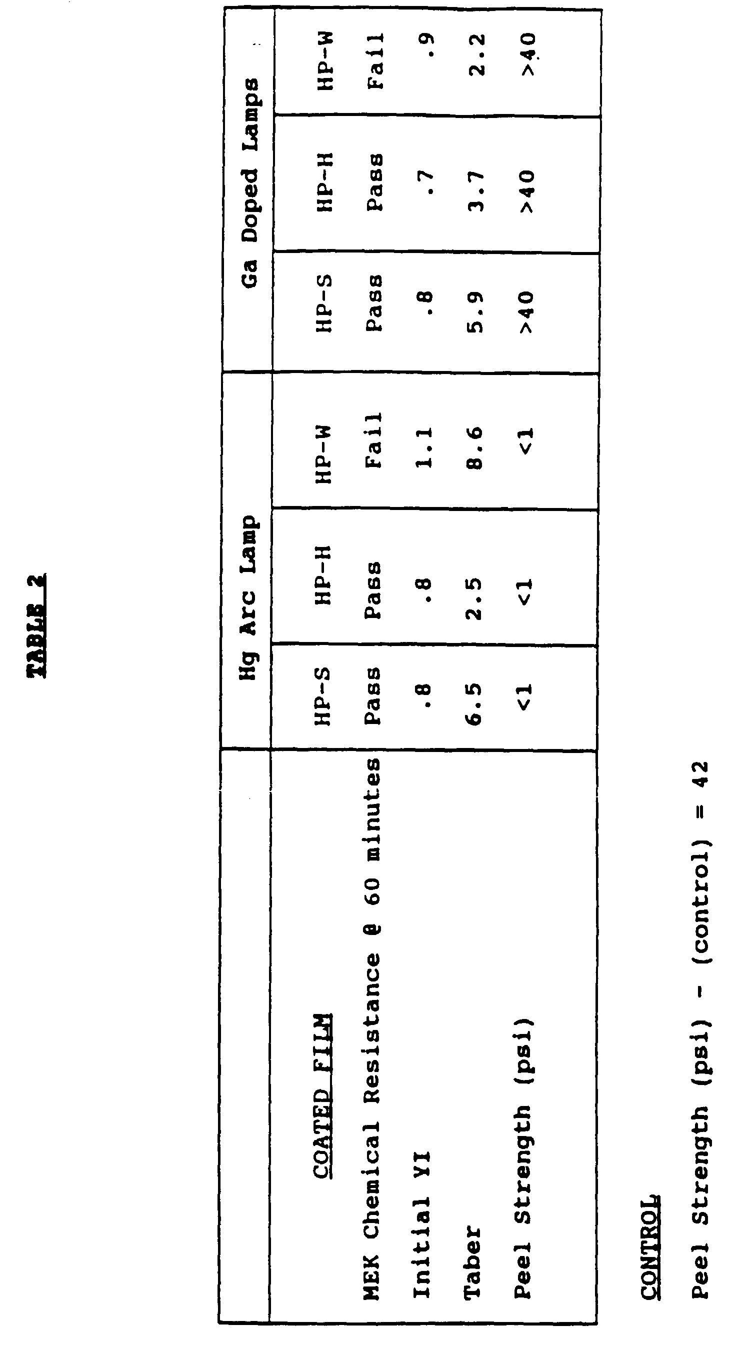

The Table 2 above shows that the initial yellowness index (YI) is improved for the HP-H and HP-W coated films cured with the gallium doped lamps. The taber abrasion (CS 10F wheel, 500 g, 100 cycles) and chemical resistance test with methyl ethyl ketone (MEK) was not affected by curing. However, the most dramatic effect observed was with the peel strengths of the two sets of samples. The peel strength measured the adhesion between the uncoated film surface and the Lexan resin. The peel strengths dramatically improved to >40 psi with the gallium doped lamps versus the </psi with typical mercury arc lamps. When a sample of PC film was used that was not exposed to UV light (control), the peel strength was 42 psi.

### EXAMPLE 3

Employing the apparatus described above and shown in the accompanying drawing, a series of polycarbonate films (Lexan ^{•}, General Electric Co., supra.) were coated with a radiation curable coating of an acrylic resin. The curing was carried out on a portion of the film preparations using an "H" type fusion UV lamp, and on a portion of the films with a Fusion "D" lamp and the remainder with a Fusion "V" lamp. The Fusion "H" UV lamp is the shortest wavelength UV output lamp (250-320 nm) while the Fusion "V" lamp produces the longest wavelength UV light (>380 nm). The Fusion "D" lamp produces wavelengths of 320-400 nm. The series of films received various numbers of exposures to the radiation. Each of the films (10 mils) were molded with standard LEXAN^{•} resin on an injection molding press with a centergated plaque tool. The "optimized" molding conditions were used, since a variation of the molding conditions do not appear to have a significant impact on final results.

Each molded plaque was cut into 1" wide strips and the film was pulled from the parts using a 90° peel fixture on an Instron tensile tester. The following Table 3 summarizes the results:

**TABLE 3**

| Fusion Lamp | # of UV Exposures | Adhesion (lbs/in²) |
|---|---|---|
| H | 1 | 0,0,0,0 |
| H | 5 | -,-,-,- |
| H | 10 | -,-,-,- |
| H | 15 | -,- |
| | | |
| D | 1 | +,+,+,+ |
| D | 5 | O,O,O,O |
| D | 10 | -,-,-,- |
| D | 15 | -,-,-,- |
| | | |
| V | 1 | +,+,+,+ |
| V | 5 | +,+,+,+ |
| V | 10 | +,+,+,+ |
| V | 15 | +,+,+,+ |
| | | |
| H | 1 | +,+,-,- |
| H | 5 | +,+,-,- |
| H | 10 | +,+,-,- |
| H | 15 | +,+,-,- |
| | | |
| D | 1 | +,+,+,+ |
| D | 5 | +,+,+,+ |
| D | 10 | +,+,+,+ |
| D | 15 | -,-,-,- |
| | | |
| V | 1 | +,+,+,+ |
| V | 5 | +,+,+,+ |
| V | 10 | +,+,+,+ |
| V | 15 | +,+,-,- |
| | | |
| H | 1 | -,-,-,- |
| H | 5 | -,-,-,- |
| H | 10 | -,-,-,- |
| H | 15 | -,-,-,- |
| | | |
| V | 1 | -,-,-,- |
| V | 5 | -,-,-,- |
| V | 10 | -,-,-,- |
| V | 15 | -,-,-,- |
| Key: + = Good (> 10 lbs/in²) O = Fair (5-10 lbs/in²) - = Poor (< 5 lbs/in ²) | | |

This series of tests clearly show that the longer wavelength Fusion lamps ("D" and "V") allow 10 UV exposures on some polycarbonate films. However, additional UV exposures even with a longer wavelength lamp, had no positive effects on adhesion. This suggests that 1 UV exposure with a shorter wavelength UV lamp causes sufficient UV induced photochemical oxidation on the surface of the polycarbonate film to disrupt any adhesion of it to polycarbonate resin for an IMD application.

### EXAMPLE 4

As seen in Example 3, supra. polycarbonate films are difficult to use in IMD applications since the adhesion of those films to molded resin is <1 psi. This delamination of the film was determined to be due to the short wavelength UV induced oxidation of the second surface of the polycarbonate film during the UV curing process.

A UV hardcoat system was applied as described above and the curable hardcoat was cured using Fusion Systems "D" lamps. The samples were then overmolded with polycarbonate resin in a 6" x 8" plaque in a JSW injection molding press. The overmolded plaques were then cut into I" x 8" long strips and the adhesion of the films to the resin was measured with an Instron Model 1115 equipped with a one air-operated film grip and a 90° peel fixture. The adhesion results which were obtained are listed as follows in Table 4.

**TABLE 4**

| Line Speed | Ct Wt (mils) (Initial) | Cure Rate/Cure Speed | Average Adhesion (psi)(2"/min) |
|---|---|---|---|
| - | - | - | 42 |
| Std | 0.3 | 300w/45fpm | 28 |
| Hi | 0.3 | 300w/45fpm | 33 |
| Std | 0.7 | 300w/45fpm | 31 |
| Hi | 0.3 | 300w/45fpm | 37 |
| Std | 0.7 | 300w/45fpm | 26 |
| Hi | 0.7 | 300w/45fpm | 44 |
| Std | 0.3 | 300w/45fpm | 27 |
| Hi | 0.7 | 300w/45fpm | 35 |
| Hi | 0.3 | 300w/45fpm | 35 |
| Std | 0.3 | 300w/45fpm | 30 |
| Std | 0.7 | 300w/45fpm | 37 |

These results clearly show that use of longer wavelength UV lamp technology results in less photochemical oxidation of the films. As a result, excellent adhesion of the film was obtained to the resin.

### EXAMPLE 5

In this example, different types of UV lamps (Fusion H, D, V and Aetek Arc Lamp Y) were used to expose polycarbonate film and the samples were then molded as before. Overmolded plaques (6" x 8") were molded as in Examples 3 and 4. The adhesion results obtained are listed as follows in Table 5.

**TABLE 5**

| Line Speed UV Exposure (fpm) | Type Lamp | # UV Exposures | Average Adhesion (psi) |
|---|---|---|---|
| 30 | Fusion "H" | 2 | 2.5 |
| 30 | Fusion "D" | 2 | 4.2 |
| 30 | Fusion "V" | 2 | 12.9 |
| 30 | Aetek Y | 2 | 1.9 |

This example clearly shows that longer wavelength lamps (Fusion D & V) cause less surface damage to the polycarbonate and thus better adhesion is obtained. The other lamps (Fusion H and Aetek Y) (shorter wavelength arc lamp) cause some degree of oxidation on the polycarbonate surface and thus, lower adhesion was obtained to the resin.

## Claims

1. A method of producing a coated polycarbonate film, which comprises;
providing a thermoplastic film of a polycarbonate resin, having an upper and a lower film surface;
coating at least one of the upper and the lower film surface with a radiation-curable acrylic coating composition; and
curing the coating on the film surface with ultraviolet radiation selected to have an average wavelength above about 320 nm.

2. A method for producing a polycarbonate film having an ultraviolet radiation cured surface coating, comprising;
a) coating an ultraviolet radiation curable coating composition on a surface of a polycarbonate film substrate for a period of time and at a temperature sufficient to allow a portion of said composition to diffuse into a region beneath said surface of said substrate to create a region comprising coating composition and polycarbonate resin, said temperature being between 90°F. and 150°F., said region having a thickness of from between 0.1 microns and 15 microns, said coating composition being substantially free of non-reactive volatile components; and
b) exposing said coating composition to sufficient ultraviolet radiation at a selected wavelength average above about 320 nm to effect cure of said coating composition.

3. The method of claim 2, wherein said coating composition comprises a polyfunctional acrylate monomer, a photoinitiator and from 20 to 50 percent by weight of 1,6-hexanediol diacrylate.

4. The method of claim 2, wherein said temperature is from 110°F. to 130°F.

5. The method of claim 2, wherein the average wavelength is within the range of from about 320 to 400 nm.

6. The product of the process of claim 1.

7. The product of the process of claim 1 adhered to the surface of an injection molded, synthetic polymeric resin article.
